# EUROPEAN PATENT APPLICATION

(11) **EP 4 477 636 A1**
(43) Date of publication of application: **18.12.2024**
(21) Application number: 22925778.7
(22) Date of filing: 11.02.2022
(51) Int. Cl.: C05F 1/00, C05B 17/00, C10L 5/42

(54) **METHOD FOR OBTAINING A FERTILISER BY PYROLYSIS OF RAW MATERIALS OF ANIMAL ORIGIN**

(71) Applicant: FERTINAGRO BIOTECH, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); CABALLERO MOLADA, Marcos, 44195 TERUEL (ES); FERRER GINES, María, 44195 TERUEL (ES); FUERTES DOÑATE, Carlos, 44195 TERUEL (ES)
(74) Representative: González López-Menchero, Álvaro Luis
(86) International application number: PCT/ES2022/070072
(87) International publication number: WO 2023/152409

(57) **Abstract**

The present invention relates to a method for obtaining a fertiliser by pyrolysis of raw materials of animal origin, in particular selected from hair, feathers, wool, or meat meal. The product obtained by said pyrolysis can be used directly as a fertiliser or as a raw material for obtaining fertilisers.

## Description

The present invention relates to a method for obtaining a fertiliser by pyrolysis of raw materials of animal origin, in particular selected from hair, feathers, wool, or meat meal. The product obtained by said pyrolysis can be used directly as a fertiliser or as a raw material for obtaining fertilisers.

Typically, pyrolysis is a thermochemical conversion process that converts biomass into useful fuels (pyroligneous acids, gases and biochars) by heating at moderately high temperatures (350-650 °C) and in the absence of oxygen, being a widely used method for the energy use of the biomass (organic material of plant origin), a source of energy considered clean with hardly any emissions of sulphur dioxide and nitrogen oxides. For these reasons, the energy conversion of biomass has become a promising route for obtaining gaseous and liquid fuels, charcoals, and chemical products of interest.

With regards to pyrolysis, it is defined as a thermochemical process for biomass transformation that, via the application of energy and in the absence of oxygen, transforms the initial biomass into three products: non-combustible gases, oils and char, or carbonaceous residue (Bahng, M.K.; Mukarakate, C.; Robichaud, D.J.; Nimlos, M.R. (2009). Current technologies for analysis of biomass thermochemical processing: A review. Analytica Chimica Acta 651(2): 117-138). The oils or liquid fraction of pyrolysis, known as "bio-oils" or "pyroligneous acids", are obtained by cooling and condensation of the gases produced during the pyrolysis process.

Depending on the operating conditions, the weight balance of the three final products may change, with temperature being the operating variable that most influences the performance and physicochemical characteristics of the final products of the process. An increase in temperature produces a greater yield of the gas fraction (Demirbas, A. (2007). The influence of temperature on the yields of compounds existing in bio-oils obtained from biomass samples via pyrolysis. Fuel Processing Technology 88(6): 591-597). The bio-oils or pyroligneous acids obtained in the process are a complex mixture of oxygenated aliphatic hydrocarbons and aromatic compounds (Balat, M., Kirtay, E., Balat, H. (2009). Main routes for the thermo-conversion of biomass into fuels and chemicals. Part 1: Pyrolysis systems. Energy Conversion and Management 50(12): 3147-3157). The direct use of these liquids as fuels is not possible due to their inherent physicochemical characteristics, such as high water content, high acidity, and viscosity. Due to this, the processing of pyroligneous acids is necessary to facilitate their use as a fuel (Demirbas A. (2000). Mechanisms of liquefaction and pyrolysis reaction of biomass. Energy Conversion and Management 42 (11): 1357-1378). Non-condensable gas, as a consequence of its chemical composition (high hydrogen and methane content), can be transformed into electrical energy via the use of turbines. The biochar or carbonaceous residue obtained after pyrolysis has the same equivalent calorific value as most bituminous coals, with the advantage that the SOx and NOx emissions produced when used as fuel (via combustion), are much lower than those produced by conventional mineral charcoals (9). Furthermore, the textural properties of these biochars allow their application as soil amendments, natural fertilisers, and CO₂ capture, toxin sequestering agent in animal feed or transformation into active carbons (Kim, K. H., J.-Y. Kim, Cho, Thae-Sue, Choi, J.W. (2012). Influence of pyrolysis temperature on physicochemical properties of biochar obtained from the fast pyrolysis of pitch pine (Pinus rigida). Bioresource Technology 118: 158-162).

For example, the article by In-Hee Hwang et al. (Characterization of products obtained from pyrolysis and steam gasification of wood waste, RDF, and RPF", Waste Management 34 (2014) 402-410) describes the products obtained from the pyrolysis of used oils, paper and plastics, and wood waste. Likewise, Ching-Yuan Chang et al. (Major Products Obtained from the Pyrolysis of Oil Sludge, Energy & Fuels 2000, 14, 1176-1183) describe the products obtained from the pyrolysis of used oils, mainly gaseous products (non-condensable gases at 298 K), excluding N₂, CO₂ (50.88% by weight), HC (hydrocarbons, 25.23% by weight, mainly paraffins and low molecular weight olefins), H₂O (17.78% by weight) and CO (6.11 % by weight), the temperature corresponding to the maximum HC production rate is 713 K. The distillation characteristics of a liquid product (gas condensate at 298 K) from the pyrolysis of oil sludge is similar to diesel oil.

Numerous documents and patent applications disclose methods for the pyrosis of biomass, specifically for the production of biofuels (see, for example, EP2823019, ES2656782, EP2783764).

The article by Henry Oghenero Orugba et al. (Multi-parametric optimization of the catalytic pyrolysis of pig hair into bio-oil, Clean Energy, 2021, 527-535 https://doi.org/10.1093/ce/zkab038) describes a pyrolysis process suitable for obtaining biofuels from pig hair, in which the combined influences of temperature, heating rate and weight of the catalyst on the yield of obtaining a bio-oil are researched.

The present invention, unlike the documents known in the state of the art, provides a method for obtaining a fertiliser by pyrolysis of raw materials of animal origin, in particular selected from hair, feathers, wool or meat meal, and the product obtained as a fertiliser can be used alone or in combination with other fertiliser products or as raw material for obtaining a fertiliser, since the solid product and the liquid product obtained via this method contain suitable amounts of ammoniacal nitrogen, organic nitrogen, phosphorus (in the form P₂O₅), potassium oxide, humic and fulvic extracts, which are well-known and useful components in the field of fertilisation and the fertiliser manufacturing industry, and residues containing labile carbon, which can be used by soil microorganisms as a source of energy, as well as to give structure to the soils and increase water retention therein.

Thus, this method allows the reuse of animal materials that are of little value or of little use in the field of fertilisation, resulting in a fertiliser or a raw material for manufacturing a fertiliser, thus increasing the value of the raw materials used.

In this context, these animal raw materials are not generally used in the fertiliser industry as such, since, due to their structure, they do not decompose, so there is no contribution to the plant of components that could be useful, since they are not available. The degradation time of these materials, if used as such, could be up to 20 years. Thus, pig hair has a total nitrogen content of 5-8% by weight, an ammoniacal nitrogen content of 0.6 to 1.2% by weight, an organic nitrogen content of 1 to 7% by weight, a soluble P₂O₅ content of 0.1 to 0.6% by weight and a soluble K2O content of 0.6 to 1.5% by weight, bird feathers have a total nitrogen content of 5-8% by weight, an ammoniacal nitrogen content of 0.1 to 0.9% by weight, an organic nitrogen content of 1 to 7% by weight, a soluble P₂O₅ content of 0.1 to 0.5% by weight and a soluble K₂O content of 0.2 to 1.0% by weight, sheep wool has a total nitrogen content of 5-8% by weight, an ammoniacal nitrogen content of 0.4 to 1.0% by weight, an organic nitrogen content of 2 to 7% by weight, a soluble P₂O₅ content of 0.2 to 0.8% by weight and a soluble K₂O content of 0.3 to 1.1% by weight and meat meal has a total nitrogen content of 8-11% by weight, an ammoniacal nitrogen content of 0.2 to 0.5% by weight, an organic nitrogen content of 1 to 10% by weight, a soluble P₂O₅ content of 3.5 to 6.5% by weight and a soluble K₂O content of 0.3 to 1.1% by weight.

Therefore, the method of the invention makes it possible to accelerate the degradation process of these less useful materials in order to use them as fertilisers.

The method of the invention, more specifically the pyrolysis of raw materials of animal origin, in particular selected from hair or feathers or wool or meat meals, is based on the pyrolysis of the selected raw material by subjecting it to
a) in the case of hair, feathers or wool, an initial heating phase, starting from room temperature (20 °C), to a first temperature of 135-138 °C, with a heating rate of 28 °C/hour or in the case of meat flour, applying only the second heating phase b), and maintaining that temperature for 15 minutes,
b) a second heating phase at a second temperature of 175-185 °C with a heating rate of 50 °C/hour, maintaining this temperature for 15 min,
c) in each heating step, recover the derived gases and subject them to a cooling step at 300-400 °C,
   obtaining from steps a) and b) a solid fertiliser and obtaining from steps c) and d) a liquid fertiliser.

The use of these temperatures is mainly conditioned by the structure of the raw material, in the case of hair, feathers and wool, the structure to maintain the characteristics thereof is made up of disulphide bridges in its bonds, which makes these raw materials, and therefore, their bonds difficult to dissociate. From 135-138 °C, the disulphide bridges are destructured and the nitrogen is free, for which reason for these three raw materials it is maintained for 15 minutes at that temperature, which allows greater recovery of the nitrogen, going from a recovery from 25% of the initial nitrogen, with a gradual rise to 28 °C/min, to a recovery greater than 75%, with maintenance for 15 minutes at 138 °C.

| | % nitrogen recovery |
|---|---|
| Constant heating rate (28°C/min) | 24.8 |
| Constant heating rate (28 °C/min) and maintain at 138 °C for 15 min | 76.1 |

Conversely, for meat meals, as they have been initially treated with temperature for reprocessing, this treatment is not required to destructure the disulphide bonds.

The pyrolysis process of the invention is essentially carried out via heating in several steps for better use of the products obtained both in relation to the solid phase and the gas phase recovered in the liquid phase, since, as is known, the final products obtained depend on the raw material used, the temperature, the reaction rate and the cooling rate of the vapours generated.

Thus, the method of the invention makes it possible to obtain a solid fertiliser and a liquid fertiliser that includes, among others, the following components useful in the field of fertilisation:

| | Solid Fertiliser (% by weigh) |
|---|---|
| Total nitrogen | 9-12 |
| Ammoniacal nitrogen | 0.2-1 |
| Organic nitrogen (amino acids) | 9-12 |
| Soluble P₂O₅ | 3-10 |
| Soluble K₂O | 0.1-3.0 |
| Humic extracts | 4-8 |
| Humic acid | 3-7 |
| Fulvic acid | 1-4 |
| Waste containing labile carbon | residue |

| | Liquid Fertiliser (% by weigh) |
|---|---|
| Total nitrogen | 5-9 |
| Ammoniacal nitrogen | 2-7 |
| Organic nitrogen (amino acids) | 2-3 |
| Soluble P₂O₅ | 0.1-0.5 |
| Soluble K₂O | 0.01-0.5 |
| Humic extracts | 4.4 - 7.2 |
| Humic acid | 3.8 - 5.2 |
| Fulvic acid | 0.6 - 2.0 |
| Amino acids | 0.5 - 3.0 |
| Waste containing labile carbon | residue |

### Examples

The following examples were carried out in a pyrolysis plant with a useful volume of 10 litres. The gases obtained were introduced into a cooling circuit using water, where the exchangers are of the shell-and-tube type and with different circuits depending on the outlet temperature of the gases from the pyrolysis reactor.

### Pig hair

20 kg of pig hair are subjected to the described method (two heating phases), obtaining 5,910 grams of a solid product with a humidity of 0.1% and 10,200 grams of a liquid product.

The solid product includes the following components:

| | % by weigh |
|---|---|
| Total nitrogen | 9.79 |
| Ammoniacal N | 0.65 |
| Organic N (amino acids) | 9.14 |
| Soluble P₂O₅ | 5.40 |
| Soluble K₂O | 1.23 |
| Humic extracts | 6.6 |
| Humic acid | 4.2 |
| Fulvic acid | 2.4 |
| Waste containing labile carbon | residue |

The liquid product includes the following components:

| | % by weigh |
|---|---|
| Total nitrogen | 6.8 |
| Ammoniacal N | 5.5 |
| Organic N (amino acids) | 1.3 |
| Soluble P₂O₅ | 0.2 |
| Soluble K₂O | 0.1 |
| Humic extracts | 4.7 |
| Humic acid | 3.8 |
| Fulvic acid | 0.9 |
| Amino acids | 2.1 |
| Waste containing labile carbon | residue |

This liquid product containing amino acids is treated to lower the pH in order to stabilise said amino acids, preferably at pH 7-7.5, with an acid selected from citric acid, sulphuric acid, and phosphoric acid.

### Bird feathers

10 kg of bird feathers are subjected to the described method (two heating phases), obtaining 2,360 grams of a solid product with a humidity of 0.1% and 6,050 grams of a liquid product.

The solid product includes the following components:

| | % by weigh |
|---|---|
| Total nitrogen | 11.5 |
| Ammoniacal N | 1.6 |
| Organic N (amino acids) | 9.9 |
| Soluble P₂O₅ | 4.80 |
| Soluble K₂O | 0.85 |
| Humic extracts | 6 |
| Humic acid | 3.5 |
| Fulvic acid | 2.5 |
| Waste containing labile carbon | residue |

The liquid product includes the following components:

| | % by weigh |
|---|---|
| Total nitrogen | 6.1 |
| Ammoniacal N | 4.6 |
| Organic N (amino acids) | 1.5 |
| Soluble P₂O₅ | 0.4 |
| Soluble K₂O | 0.1 |
| Humic extracts | 4.3 |
| Humic acid | 3.0 |
| Fulvic acid | 1.3 |
| Amino acids | 1.8 |
| Waste containing labile carbon | residue |

This liquid product containing amino acids is treated to lower the pH in order to stabilise said amino acids, preferably at pH 7-7.5, with an acid selected from citric acid, sulphuric acid, and phosphoric acid.

### Sheep wool

17 kg of sheep wool are subjected to the described method (two heating phases), obtaining 4,100 grams of a solid product with a humidity of 0.1% and 8,640 grams of a liquid product.

The solid product includes the following components:

| | % by weigh |
|---|---|
| Total nitrogen | 10.8 |
| Ammoniacal N | 1.9 |
| Organic N (amino acids) | 8.9 |
| Soluble P₂O₅ | 5.3 |
| Soluble K₂O | 0.4 |
| Humic extracts | 6.3 |
| Humic acid | 4.6 |
| Fulvic acid | 1.7 |
| Waste containing labile carbon | residue |

The liquid product includes the following components:

| | % by weigh |
|---|---|
| Total nitrogen | 5.9 |
| Ammoniacal N | 4.9 |
| Organic N (amino acids) | 1.2 |
| Soluble P₂O₅ | 0.7 |
| Soluble K₂O | 0.3 |
| Humic extracts | 5.1 |
| Humic acid | 4.0 |
| Fulvic acid | 1.1 |
| Amino acids | 1.9 |
| Waste containing labile carbon | residue |

This liquid product containing amino acids is treated to lower the pH in order to stabilise said amino acids, preferably at pH 7-7.5, with an acid selected from citric acid, sulphuric acid, and phosphoric acid.

### Meat meal

15 kg of meat meal are subjected to the described method (one heating phase), obtaining 4,700 grams of a solid product with a humidity of 0.1% and 7,230 grams of a liquid product.

The solid product includes the following components:

| | % by weigh |
|---|---|
| Total nitrogen | 10.4 |
| Ammoniacal N | 1.1 |
| Organic N (amino acids) | 9.3 |
| Soluble P₂O₅ | 4.6 |
| Soluble K₂O | 0.3 |
| Humic extracts | 7.3 |
| Humic acid | 4.7 |
| Fulvic acid | 1.6 |
| Waste containing labile carbon | residue |

The liquid product includes the following components:

| | % by weigh |
|---|---|
| Total nitrogen | 5.4 |
| Ammoniacal N | 4.4 |
| Organic N (amino acids) | 1.0 |
| Soluble P₂O₅ | 1.1 |
| Soluble K₂O | 0.4 |
| Humic extracts | 7.8 |
| Humic acid | 6.2 |
| Fulvic acid | 1.6 |
| Amino acids | 2.4 |
| Waste containing labile carbon | residue |

This liquid product containing amino acids is treated to lower the pH in order to stabilise said amino acids, preferably at pH 7-7.5, with an acid selected from citric acid, sulphuric acid, and phosphoric acid.

## Claims

1. A method for obtaining a fertiliser by pyrolysis of raw materials of animal origin selected independently from hair, feathers, wool, or meat meal, wherein the selected raw material is subjected to
a) in the case of hair, feathers or wool, an initial heating phase, starting from room temperature (20 °C), to a first temperature of 135-138 °C, with a heating rate of 28 °C/hour and maintaining that temperature for 15 minutes, or in the case of meat meal, applying only the second heating phase b),
b) a second heating phase at a second temperature of 175-185 °C with a heating rate of 50 °C/hour, maintaining this temperature for 15 min,
c) in each heating step, recover the derived gases and subject them to a cooling step at 300-400 °C,
obtaining from steps a) and b) a solid fertiliser and obtaining from steps c) and d) a liquid fertiliser.

## Amended claims

### Amended claims under Art. 19.1 PCT

1. A method for obtaining a fertiliser by pyrolysis of raw materials of animal origin selected independently from hair, feathers, wool, or meat meal, wherein the selected raw material is subjected to
a) in the case of hair, feathers or wool, an initial heating phase, starting from room temperature (20 °C), to a first temperature of 135-138 °C, with a heating rate of 28 °C/hour and maintaining that temperature for 15 minutes, or in the case of meat meal, applying only the second heating phase b),
b) a second heating phase at a second temperature of 175-185 °C with a heating rate of 50 °C/hour, maintaining this temperature for 15 min,
c) in each heating step, recover the derived gases and subject them to a cooling step,
obtaining from steps a) and b) a solid fertiliser and obtaining from step c) a liquid fertiliser.
